# EUROPEAN PATENT SPECIFICATION

(11) **EP 3 403 512 B1**
(45) Date of publication and mention of the grant of the patent: **25.10.2023**
(21) Application number: 17171257.3
(22) Date of filing: 16.05.2017
(51) Int. Cl.: A23L 2/02, A23L 2/52, A23L 2/66, A23L 33/10, A23L 33/16, A23L 33/175

(54) **NONALCOHOLIC FITNESS BEVERAGE**
NICHTALKOHOLISCHES FITNESSGETRÄNK
BOISSON D'EXERCICE NON ALCOOLIQUE

(43) Date of publication of application: 21.11.2018
(73) Proprietor: Schäfer, Rolf, 4422 Arisdorf (CH)
(72) Inventor: Schäfer, Rolf, 4422 Arisdorf (CH)
(74) Representative: Braunpat AG

(56) References cited:
- CN-A- 105 613 172
- CN-B- 104 396 414
- US-A- 6 048 566
- US-A1- 2005 276 839
- US-A1- 2012 258 087
- US-A1- 2016 340 626

## Description

### Field

The present disclosure relates to a method for preparing nonalcoholic fitness beverages.

### Background

Many different fitness beverages have been disclosed. For example, Da Silva et al. in U.S. patent application 13/965,937 describe a drink that combines the stimulating properties of taurine, caffeine and inositol with the antioxidative benefit of chia seeds. Latzke developed an energy drink containing at least 1 g/l of a guarana extract and at least 25 g/l of a sugar as disclosed in Offenlegungschrift DE 19937079. Nutritional drinks that comprise one or more neutraceuticals and a natural source of caffeine are described in U.S. patent application no. 11/971,723. The neutraceuticals can be ginseng, glutamine and phenylalanine. For an energy drink, flower pollen, organic oat straw, organic gotu kola, sasafrass and panthenic acid are added. International patent application PCT/US2005/001865 provides a beverage comprising a vitamin B, vitamin C, taurine, an extract of gingko bilaboa and extract of guarana. The drink may further include an extract of ginseng, caffeine, effervescents, sweeteners, salts, lubricants, preservatives, excipients, flavorants and/or colorants.

Several patent publications relate to beverages containing coenzyme Q10, also referred to as ubiquinone. U.S. patent no. 8,642,097 discloses a natural product energy drink that is a combination of a solvent, a natural product and/or a nutrient. Examples of nutrients include carnitine and a form of coenzyme Q10. U.S. patent application publication 2012/258087 discloses nonalcoholic beverages that can contain coenzyme Q10, carnitine, carbohydrates, antioxidants or selenium glycinate. U.S. patent no. 6,403,116 discloses compositions containing coenzyme Q10 and methyl sulfonyl methane for subsequent introduction into beverages. The compositions further include citric acid and a polysorbate, the latter used to solubilize the coenzyme Q10. Optionally, they may further contain a water-soluble polysaccharide such as, for example, maltodextrin. Offenlegungsschrift DE 102005049664 relates to solutions comprising coenzyme Q10 and a component of group A, B and/or C are also described. Group A are metallic trace elements such as zinc und selenium, group B are amino acids and group C plant extracts (e.g., from ginseng, etc.). Energy drinks containing dimethylaminoethanol, L-tyrosine and coenzyme Q10 are provided in Gebrauchsmusterschrift DE 202013010613. U.S. patent no. 6,048,566 also discloses beverages comprising coenzyme Q10. The beverages can further contain selenium, typically as sodium selenite, carbohydrates such as maltodextrin or fructose and can be flavored by a mixture of citrus, cassis and mango. U.S. patent application publication 2016/340626 describes beverages that can be flavored by fruits such as mango or by quinine in the case of tonic-like beverages. Chinese patent applications nos. 105 613 172 and 104 396414 relate to the production of selenium-rich mango.

### Summary

The invention is defined by the claims. The invention relates to a method for preparing a non alcoholic fitness beverage comprising, in a total volume of 250 ml, a dietarily relevant amount of organic selenium (10-450-280 ug),the method comprising (a) preparing a solution comprising, for a total volume of the beverage of 250 ml, 0.3 - 3.0 g carnitine, 10 - 300 mg coenzyme Q10, 2.5 - 25 mg quinine and 2.0 - 25 g carbohydrates in spring water, (b) subjecting the solution to sterile filtration, (c) adding to the sterile filtrated solution, for a total volume of the beverage of 250 ml, 5.0 - 40 g fruit pulp from organic selenium-enriched mango fruit, the mango fruit pulp supplemented with 1-3 wt % of a natural preservative and 0.1 - 0.2wt % of an antioxidant, wherein the mango fruit pulp comprises 2.0 - 7.0 ug selenium per g of pulp, and (d) adding sterile spring water to the total volume.

The present disclosure relates to a method for preparing fitness drinks or beverages that comprise components that support energy production as well as components that have antioxidant properties. The components that support energy production are carnitine and coenzyme Q10. Components that have antioxidant properties are coenzyme Q10, organic selenium as well as the antioxidants provided in small amounts by the added mango fruit pulp. The added fruit pulp is prepared from fruits harvested from trees grown in soil fertilized with an inorganic selenium salt. Hence, organic selenium (mainly in the form of selenomethionine and/or selenocysteine) is provided in an economically advantageous fashion by the mango fruit pulp. Furthermore, the drinks are distinctively flavored by the combination of the added mango fruit pulp and quinine.

More specifically, the fitness drinks comprise, in a volume of 250 ml, 0.3 - 3.0 g carnitine, 10 - 300 mg coenzyme Q10, 5.0 - 40 g mango fruit pulp comprising 2.0 - 7.0 µg selenium per g of pulp, 2.5 - 25 mg quinine (added preferably as quinine sulfate; amounts given relate to quinine base), 2.0 - 25 g carbohydrates and spring water. In all embodiments of the beverages, the mango fruit pulp is supplemented with 1-3 wt % (preferably 2 wt %) of a natural preservative and 0.1 - 0.2 wt % (preferably 0.15 wt %) of an antioxidant. Preferably, the preservative is sodium citrate/citric acid, and the antioxidant is ascorbic acid.

More preferably, the fitness drinks comprise, in a volume of 250 ml, 0.5 - 2.0 g carnitine, 30 - 150 mg coenzyme Q10, 5.0 - 20 g mango fruit pulp comprising 2.0 - 7.0 µg selenium per g of pulp, 10 - 25 mg quinine, 5.0- 25 g carbohydrates and spring water.

Most preferably, the fitness drinks comprise, in a volume of 250 ml, 1.0 +/- 0.15 g carnitine, 50 +/- 7.5 mg coenzyme Q10 (dissolved in 200mg E433 (polysorbate 80)), 12.5 +/- 1.9 g mango fruit pulp comprising 6.0 +/- 0.9 µq selenium per g of pulp, 20 +/- 3.0 mg quinine, 20 +/- 3.0 g carbohydrates and spring water. The fruit pulp is supplemented with 1-3 wt % (preferably 2 wt %) of sodium citrate/citric acid and 0.1 - 0.2 wt % (preferably 0.15 wt %) of ascorbic acid. It is further noted that for safety reason, the effective components (carnitine, coenzyme Q10, selenium) were added in this composition at doses corresponding to about half of the typical elevated doses used in preclinical and clinical experiments described hereinafter. Hence, the latter elevated doses are ingested only after consumption of two 250-ml units of the beverage. This measure is intended to render over- consumption of effective components more difficult.

In particular embodiments, the carbohydrate is sucrose, raw cane sugar, a 1:1 (wt) mixture of sucrose and raw cane sugar, a 1:1 (wt) mixture of sucrose and glucose, a 1:1 (wt) mixture of glucose and raw cane sugar, a 1:1 (wt) mixture of glucose and fructose, or an artificial sweetener added in an amount providing an approximately similar sweetness as 20 g sucrose (e.g., about 0.1 g of aspartame or about 0.4 g of cyclamate).

The beverages are filled into aluminium cans using methods well known in the art. A preferred fill volume is 250 ml. Standard filling methods include sterile filtration through a 0.45 µm membrane of all ingredients other than fruit pulp. As discussed supra, the fruit pulp is supplemented with 1-3 wt % (preferably 2 wt %) of a natural preservative and 0.1 -0.2 wt % (preferably 0.15 wt % of stabilizing antioxidant. Preferably, the preservative is sodium citrate/citric acid, and the antioxidant is ascorbic acid. Optionally, a food dye (0.05 - 0.2 wt % (preferably 0.1 wt % ß-carotene) and a mango aroma (0.2 - 0.4 wt %, preferably 0.3 wt %) are added to the fruit pulp.

### Detailed description

Abbreviations: "g", "mg", "µg" and "ng" correspond to gram, milligram, microgram and nanogram, respectively. "I", "dl" and "ml" correspond to liter, deciliter and milliliter, respectively. "wt" refers to weight.

The beverages comprise an effective amount or a defined fraction of an effective amount of coenzyme Q10.

Coenzyme Q10 or ubiquinone (reduced form: ubiquinal) is a key component in mitochondrial bioenergy transfer. It is a lipophilic inner mitochondrial membrane cofactor that participates in the shuttling of electrons involved in the formation of ATP. Physiologie concentrations of coenzyme Q10 do not fully saturate mitochondrial receptors. A small further increase in the mitochondrial Q10 concentration can accelerate mitochondrial respiration. This may be the biochemical mechanism underlying the effects of Q10 supplementation observed in certain studies. Deichmann et al. (2010) Coenzyme Q10 and statin-induced mitochondrial dysfunction. The Ochsner Journal 10: 16-21. Coenzyme Q10 is synthesized from mevalonic acid whose own synthesis is inhibited by hydroxyl-methylglutaryl-coenzyme A reductase inhibitors (statins).

In its reduced form, coenzyme Q10 has been found to inhibit oxidation of proteins, DNA and lipids. Serum concentration in healthy individuals is about 0.8 to 1.0 µg/ml. Most serum coenzyme Q10 is bound to lipoproteins. Supplementation of coenzyme Q10 increases serum levels and inhibits lipid peroxidation.

Statin therapy tends to significantly reduce Q10 levels (by up to 50%). Some studies were able to correlate this relative deficiency with statin-induced myopathy. Older persons may have an increased demand for coenzyme Q10. A study noted a significantly reduced content of coenzyme Q10 in myocardial trabecular tissue of over 70-year-olds. This was associated with a significantly reduced contractile performance *in vitro.* Performance was improved by pretreatment with coenzyme Q10. A mouse study reported analogous results. Strenuous exercise may also reduce levels of coenzyme Q10 in muscle tissue. Such exercise results in increased uptake of coenzyme Q10 into the muscles.

In a double-blind, placebo-controlled study, 17 healthy adults were randomized to placebo, 100 or 300 mg coenzyme Q10 for eight days. Mizuno et al. (2008) Antifatigue effects of coenzyme Q10 during physical fatigue. Nutrition 24(4): 293-299. Erratum in: Nutrition (2008) 24(6): 616. Baseline Q10 levels were 0.54 µg/ml, which levels increased to 2.08 and 3.11 µg/ml upon supplementation. After 30 minutes of exercise on a bicycle ergometer, the group that had received 300 mg coenzyme Q10 showed a statistically significant improvement in measures of fatigue using a visual scale. In another double-blind study on 18 kendo athletes, supplementation with 300 mg coenzyme Q10 per day was tested for effects on exercise-induced muscle injury as measured by elevation of CPK levels. Korn et al. (2008) Reducing exercise-induced muscular injury in kendo athletes with supplementation of coenzyme Q10. Br. J. Nutr. 100(4): 903-909. Baseline levels of coenzyme Q10 were about 1.0 µg/ml at the outset and increased about four-fold. After 4 days, elevations in CPK were statistically about 50% lower in the treated group versus the placebo group. In a study of 18 basketball players that were administered 100 mg/day of coenzyme Q10 for 40 days, an 18% improvement in peak inspired oxygen consumption V'O₂max was measured in the athletes. Amadio et al. Effect of CoQ10 administration on VO2max and diastolic function in athletes. In: Folkers K, Littarru GP, Yamagami T, eds. Biomedical and Clinical Aspects of Coenzyme Q10. New York, NY: Elsevier Science; 1991; pp. 513-520. Another study enrolled 22 trained athletes who had been exercising 8 hours per week (9 workouts per week for at least 2 years) and 19 untrained individuals who had not engaged in regular exercise for the past year. Cooke et al. (2008) Effects of acute and 14-day coenzyme Q10 supplementation on exercise performance in both trained and untrained individuals. J. Int. Soc. Sports Nutr. 5: 8. The study found that treatment with 200 mg/day coenzyme Q10 increased Q10 serum concentration which elevation correlated with increased V'O2max and increased treadmill time to exhaustion. Muscle levels of Q10 were also elevated. These findings were made both in the trained and in the untrained study participants. Statistically significant improvements in multiple measures of physical performance were observed in a double-blind study involving 25 Finnish top-level cross-country skiers. Ylikoski et al. (1997) The effect of coenzyme Q10 on the exercise performance of cross-country skiers. Mol. Aspects Med. 18(suppl): 283-290. After administration of 90 mg of coenzyme Q10 per day for 6 weeks, plasma levels in the treated group rose from 0.8 to 2.8 mg/ml. V'O2max increased by 1.6 ml/kg per minute (P = 0.02), the anaerobic threshold increased by 2.4 ml/kg per minute (P = 0.003), and aerobic threshold increased by 2.6 ml/kg per minute (P = 0.001). Additionally, 94% of the athletes, versus only 33% in the placebo group, thought that coenzyme Q10 had shortened their recovery time.

These and other studies provide evidence that coenzyme Q10 supplements enhance energy metabolism and have related biological effects. It is noted, however, that a number of studies failed to uncover similar effects.

The beverages comprise an effective amount or a defined fraction of an effective amount of carnitine.

Carnitine is derived from L-lysine and L-methionine and is found in nearly all cells of the body. Its name is derived from the Latin *carnus* or flesh, as the compound was isolated from meat. Carnitine is the generic term for a number of compounds that include L-carnitine, acetyl-L-carnitine, and propionyl-L-carnitine.

Carnitine plays a critical role in energy production. It transports long-chain fatty acids into the mitochondria so that they can be oxidized ("burned") to produce energy. It also transports the toxic compounds generated out of this cellular organelle to prevent their accumulation. Given these key functions, carnitine is concentrated in tissues like skeletal and cardiac muscle that utilize fatty acids as a dietary fuel.

The body normally makes sufficient carnitine to meet the needs of most people. Best dietary sources for carnitine are red meats. It has been generally believed that carnitine supplements, given at doses of 2-6 g/day for 1-28 days do not improve exercise or physical performance. Fact Sheet, National Institutes of Health, Office of Dietary Supplements, May 10, 2013 update. However, several relatively recent studies found evidence that carnitine supplementation enhances fat oxidation and enhances aspects of physical performance. A few are briefly described below.

A study of the University of Leipzig found that L-carnitine supplementation can enhance the oxidation of long-chained fatty acids *in vivo* in healthy adults. Marked fatty acids were administered to the participants either before or after a 10-day regimen of L-carnitine. Measurements of labeled C02 in exhaled air revealed significant increases in subjects that had been administered carnitine, strongly suggesting that carnitine supplementation had significantly enhanced fatty acid oxidation. These findings were corroborated in a study by another group that involved slightly overweight adults. Billigmann and Siebrecht. Physiologie des L-Camitins und seine Bedeutung für Sportler. 2004, ISBN 3-89993-752-X. Lorenz: Der Einfluss von L-Carnitin auf die Fettoxidation, den Proteinturnover und die Körperzusammensetzung bei leicht übergewichtigen Erwachsenen. Dissertation. Universität Rostock, 2004. A study by Wall et al. (Chronic oral ingestion of L-carnitine and carbohydrate increases muscle carnitine content and alters muscle fuel metabolism during exercise in humans. J. Physiol. (2011) 589.4: 963-973) demonstrated that muscle carnitine content can be increased in humans by dietary means and, perhaps more importantly, that carnitine plays a dual role in skeletal muscle fuel metabolism that is exercise intensity dependent. Specifically, increasing muscle total carnitine content reduces muscle carbohydrate use during low intensity exercise, consistent with an increase in muscle lipid utilization. However, during high intensity exercise muscle carnitine loading results in a better matching of glycolytic, pyruvate dehydrogenase complex and mitochondrial flux, thereby reducing muscle anaerobic energy generation. Collectively, these metabolic effects resulted in a reduced perception of effort and increased work output during a validated exercise performance test. These findings have significant implications for athletic performance and pathophysiological conditions where fat oxidation is impaired or anaerobic ATP production is increased during exercise. Another study investigated the effects of L-carnitine L-tartrate (LCLT) on markers of purine catabolism, free radical formation, and muscle tissue disruption after squat exercise. With the use of a balanced, crossover design (1-week washout), 10 resistance-trained men consumed a placebo or LCLT supplement (2 g L-carnitine/day) for 3 weeks before obtaining blood samples on six consecutive days (D1 to D6). Blood was also sampled before and after a squat protocol (5 sets, 15-20 repetitions) on D2. Muscle tissue disruption at the midthigh was assessed using magnetic resonance imaging (MRI) before exercise and on D3 and D6. Exercise-induced increases in plasma markers of purine catabolism (hypoxanthine, xanthine oxidase, and serum uric acid) and circulating cytosolic proteins (myoglobin, fatty acid-binding protein and creatine kinase) were significantly (P </= 0.05) attenuated by LCLT. Exercise-induced increases in plasma malondialdehyde returned to resting values sooner during LCLT compared with placebo. The amount of muscle disruption from MRI scans during LCLT was 41-45% of the placebo area. These data indicate that LCLT supplementation is effective in assisting recovery from high-repetition squat exercise. Volek et al. (2001) L-Carnitine L-tartrate supplementation favorably affects markers of recovery from exercise stress. Am. J. Physiol. Endocrinol. Metab. 282: E474-E482.

Carnitine supplementation may also have anti-aging effects as carnitine concentration in tissues declines with age and thereby reduces the integrity of the mitochondrial membrane. Research in aged rats found supplementation with high doses of acetyl-L-carnitine and alpha-lipoic acid (an antioxidant) to reduce mitochondrial decay (reported in the Fact Sheet). The animals also moved about more and improved their performance on memory-requiring tasks. A meta-analysis of double-blind, placebo-controlled studies suggests that supplements of acetyl-L-carnitine may improve mental function and reduce deterioration in older adults with mild cognitive impairment and Alzheimer's disease. Montgomery et al. (2003) Meta-analysis of double blind randomized controlled clinical trials of acetyl-L-carnitine versus placebo in the treatment of mild cognitive impairment and mild Alzheimer's disease. Int. Clin. Psychopharmacol. 18: 61-71. In these studies, subjects took 1.5-3.0 g/day of acetyl-L-carnitine for 3-12 months.

Several studies have examined the effectiveness of supplemental carnitine in the management of cardiac ischemia (restriction of blood flow to the heart) and peripheral arterial disease (whose most important symptom is poor circulation in the legs, known as intermittent claudication). A meta-analysis of several trials revealed that treatment with L-carnitine in patients experiencing an acute myocardial infarction reduces all-cause mortality by 27%, ventricular arrhythmias by 65%, and angina by 40% over a median follow-up period of 2 months, but does not reduce the risk of heart failure or recurrence of myocardial infarction. However, in the case of claudication, carnitine might improve the performance of skeletal muscles in the leg. In a meta-analysis that included a large number of randomized clinical trials the authors concluded that propionyl-L-carnitine significantly increases peak walking distance in patients with claudication. Brass et al. (2013) A systematic review and meta-analysis of propionyl-L-carnitine effects on exercise performance in patients with claudication. Vase. Med. 18: 3-12.

Treatment with carnitine supplements may have positive palliative effects in the many cancer patients suffering from a deficiency of carnitine (discussed in the Fact Sheet). Finally, carnitine may be of value in the treatment of male infertility. A randomized, double-blind crossover trial found that 2 g/day of carnitine taken for 2 months by 100 infertile men increased the concentration and both total and forward motility of their sperm. Lenzi et al. (2003) Use of carnitine therapy in selected cases of male factor infertility: a double-blind crossover trial. Fertil. Steril. 79: 292-300. The reported benefits may relate to increased mitochondrial fatty-acid oxidation (providing more energy for sperm) and reduced cell death in the testes. Larger studies will be needed to confirm carnitine's potential value as an infertility therapy.

The beverages manufactured by the methods according to the claims comprise an effective amount or a defined fraction of an effective amount of selenium.

Selenium is a trace element that is nutritionally essential for humans. Dietary fact sheet on selenium, National Institutes of Health, Office of Dietary Supplements, February 11, 2016 update. About 30 selenoproteins have been identified in mammals. Humans express about 25 of these. Selenium is typically incorporated in the latter proteins in the form of selenocysteine which is also termed the 21^{st} amino acid. Selenocysteine is cotranslationally inserted and encoded by the UGA codon, which is normally a termination codon. Roy et al. (2005) Selenium-containing enzymes in mammals: chemical perspectives. J. Chem. Sei. 117(4): 287-303. Selenoproteins play important roles in reproduction, thyroid hormone metabolism, DNA synthesis, and protection from oxidative damage and infection.

Selenium exists in inorganic (selenate and selenite) and organic (selenomethionine and selenocysteine) forms. Both forms can be dietary sources of selenium: selenomethionine, selenocysteine and selenate are very well absorbed (>90%). However, selenate is not well retained. Only about 50% of selenite is absorbed, but the compound is better retained than selenate. Fairweather-Tait et al. (2010) Selenium bioavailability: current knowledge and future research requirements. Am. J. Clin. Nutr. 91 (suppl.): 1484S-1491 S. Soils may contain inorganic selenites and selenates that plants accumulate and convert to organic forms, mostly selenocysteine and selenomethionine and their methylated derivatives.

The most commonly used measures of selenium status are plasma and serum selenium concentrations. Concentrations in blood and urine reflect recent selenium intake. Analyses of hair or nail selenium content can be used to monitor longer-term intakes over months or years. Quantification of one or more selenoproteins (such as glutathione peroxidase and selenoprotein P) is also used as a functional measure of selenium status. Plasma or serum selenium concentrations of 8 µg/dl or higher in healthy people typically meet needs for selenoprotein synthesis.

Intake recommendations for selenium are provided in the Dietary Reference Intakes (DRIs) developed by the Food and Nutrition Board (FNB) at the Institute of Medicine of the National Academies (formerly National Academy of Sciences). DRI is the general term for a set of reference values used for planning and assessing nutrient intakes of healthy people. These values, which vary by age and sex, include the Recommended Dietary Allowance (RDA), which is the average daily level of intake sufficient to meet the nutrient requirements of nearly all (97%-98%) healthy individuals. For adults, the RDA for selenium is 55 µg. The Deutsche Gesellschaft für Ernährung, Osterreichische Gesellschaft für Ernährung, Schweizerische Gesellschaft für Ernährung D-A-CH estimates a reasonable daily intake level at 60 µg for adult women and 70 µg for adult men. (Sachverständigen-Ausschuss für Verschreibungspflicht 17. Januar 2017. Bundesinstitut für Arzneimittel und Medizinprodukte) The European Food Safety Authority EFSA has a value of 70 µg for both sexes.

Major food sources of selenium in the Western diet are breads, grains, meat, poultry, fish, and eggs. It is noted that the amount of selenium in a given type of plant-based food depends on the amount of selenium in the soil and several other factors, such as soil pH, amount of organic matter in the soil, and whether the selenium is in a form that is amenable to plant uptake. As a result, selenium concentrations in plant-based foods vary widely by geographic location.

Because of its effects on DNA repair, apoptosis, and the endocrine and immune systems as well as other mechanisms, including its antioxidant properties, selenium may play a role in the prevention of cancer. Because of the antioxidative functions of certain selenoenzymes, selenium supplements may also reduce cardiovascular risk or the age-related decline in cognitive function. Several randomized controlled trials of selenium supplementation for cancer prevention have yielded positive results. Dietary fact sheet on selenium, National Institutes of Health. A Cochrane review concluded, based on nine randomized clinical trials, that selenium might help prevent gastrointestinal cancers but noted that these results need to be confirmed in more appropriately designed randomized clinical trials. A secondary analysis of the double-blind, randomized, controlled Nutritional Prevention of Cancer Trial in 1,312 U.S. adults with a history of basal cell or squamous cell carcinomas of the skin found that 200 µg/day selenium as high-selenium baker's yeast for 6 years was associated with a 52% to 65% lower risk of prostate cancer. This effect was strongest in men in the lowest fertile of selenium concentrations who had a baseline prostate-specific antigen (PSA) level of 4 ng/ml or lower. It is noted that other trials failed to detect similar preventative effects of selenium supplementation.

Regarding the risk of cardiovascular disease, in a randomized, placebo-controlled study, 474 healthy adults aged 60 to 74 years with a mean baseline plasma selenium concentration of 9.12 µg/dl were supplemented with 100, 200, or 300 µg selenium per day or placebo for 6 months. The supplements lowered levels of total plasma cholesterol and non-high-density-lipoprotein (HOL) plasma cholesterol (total cholesterol levels minus HOL levels) compared with the placebo group, whereas the 300 µg/day dose significantly increased HOL levels. However, other trials could not detect a reduction of the risk of cardiovascular disease or cardiac death.

The "Supplémentation en Vitamines et Minéraux Antioxydants" (SU.VI.MAX) study on 4,447 participants aged 45 to 60 years in France found that, compared with placebo, daily supplementation with 120 mg ascorbic acid, 30 mg vitamin E, 6 mg beta-carotene, 100 µg selenium, and 20 mg zinc for 8 years was associated with higher episodic memory and semantic fluency test scores 6 years after the study ended. Hence, selenium in combination with other antioxidants appears capable of slowing cognitive decline.

Selenium plays a role in thyroid hormone synthesis and metabolism. Two large studies established the existence of an inverse relationship between serum selenium level and thyroid volume in women. A randomized, double-blind, placebo-controlled trial compared the effects of 200 µg/day selenium (as sodium selenite), 1,200 mg/day pentoxifylline (an antiinflammatory agent), or placebo for 6 months in 159 patients with mild Graves' orbitopathy (thyroid eye disease). Compared with patients treated with placebo, those treated with selenium but not pentoxifylline reported a higher quality of life. Furthermore, ophthalmic outcomes improved in 61% of patients in the selenium group compared with 36% of those in the placebo group, and only 7% of the selenium group had mild progression of the disease, compared with 26% of those in the placebo group. It appears that selenium supplementation affects thyroid function and, therefore, may be beneficial to maintain thyroid health.

### Quinine sulfate is used as a co-flavorant in the beverages of the present disclosure. (Amounts given relate to the quinine base.)

Quinine is an alkaloid that occurs in the bark of the South American cinchona tree (Chinchona pubescens). Although chemical synthesis is possible, it is not economical, and the compound is commercially harvested from the cinchona tree. At elevated doses, quinine has been used as an antimalarial agent. Quinine is a basic amine and is usually provided as a salt. Various existing preparations comprise the hydrochloride, dihydrochloride, sulfate, bisulfate and gluconate. Because of its bitter taste, quinines have been used to flavor beverages. Quinine is a flavor component of tonic water and bitter lemon drink mixers. It is noted that the amount of quinine in beverages has been limited to 83 ppm in the U.S., and to 100 ppm in the EU (VO(EG) Nr. 1334/2008).

The beverages manufactured by the methods of the present invention comprise fruit pulp from mangos. This component serves multiple purposes. First, it is used to deliver organic selenium to the beverages in an economic fashion. To achieve this, as is described in more detail below, mango trees are cultivated in soil fertilized with an inorganic selenium salt. This results in an accumulation in the fruit flesh of organic selenium. Second, the mango fruit pulp is used to assist the solubilization of the entirely water-insoluble coenzyme Q10. Third, the mango fruit pulp together with the quinine provides the beverages with a unique and distinctive flavor. Finally, the mango fruit pulp is a source of some additional antioxidants, mainly vitamins A and C (Table 1).

**Table 1: Contents of the Mango fruit (Mangifera indica), fresh**

| Principle | Nutrient value per 100 g | Percentage of recommended daily allowance (RDA) | Nutrient value (mean) in 250 ml of the most preferred beverage of the disclosure |
|---|---|---|---|
| Energy | 70 Kcal | 3.5% | 5 Kcal |
| Carbohydrates | 17g | 13% | |
| Protein | 0.5 g | 1% | |
| Total Fat | 0.27 g | 1% | |
| Dietary Fiber | 1.80 g | 4.5% | |
| | | | |

| Vitamins | Nutrient value per 100 g | Percentage of RDA | |
|---|---|---|---|
| Folates | 14 µg | 3.5% | |
| Niacin | 0.584 mg | 3.5% | |
| Pantothenic acid | 0.160 mg | 1% | |
| Pyridoxine (vit B-6) | 0.134 mg | 10% | |
| Riboflavin | 0.057 mg | 4% | |
| Thiamin | 0.058 mg | 5% | |
| Vitamin C | 27.7 mg | 46% | 2.1 mg (3.5% RDA) |
| Vitamin A | 765 IU | 25.5% | 57 IU (1.9% RDA) |
| Vitamin E | 1.12 mg | 7.5% | |
| Vitamin K | 4.2 µg | 3.5% | |
| | | | |

| Electrolytes | Nutrient value per 100 g | Percentage of RDA | |
|---|---|---|---|
| Sodium | 2 mg | 0% | |
| Potassium | 156 mg | 3% | |
| | | | |

| Minerals | Nutrient value per 100 g | Percentage of RDA | |
|---|---|---|---|
| Calcium | 10 mg | 1% | |
| Copper | 0.110 mg | 12% | |
| Iran | 0.13 mg | 1.5% | |
| Magnesium | 9 mg | 2% | |
| Manganese | 0.027 mg | 1% | |
| Zinc | 0.04 mg | 0% | |
| | | | |

| Phytonutrients | Nutrient value per 100 g | Percentage of RDA | |
|---|---|---|---|
| Carotene-ß | 445 µg | -- | |
| Carotene-a | 17 µg | -- | |
| Crypto-xanthin-ß | 11 µg | -- | |

| | | | |
|---|---|---|---|
| Source: USDA National Nutrient data base | | | |

Several fruits were tested as potential reservoirs of organic selenium. Table 2 shows experimental results for mango and papaya. Mango trees (8-years old, cultivar: KEITT) or papaya trees (cultivar GV) were cultivated in a greenhouse. The plants were grown in 50% humus - 50% peat/clay/sand (1:1:1) at 26-28°C and 80-90% humidity. Once a year in spring, fertilization was with 50 g aluminum sulfate/l of fertilizer NPK 7-4-6 (7% nitrogen, 4% phosphor, 6% potassium; calculated as NH3, P2Os und K2O). Subsequently, the plants were fertilized every 14 days for the remainder of the year with NPK 7-4-6 fertilizer containing 500 mg/l ammonium selenite, Na-selenite or K-selenite. About 0.5 1 of fertilizer per kg of soil were dispensed each time.

Ripe fruit were harvested and peeled. The fruit flesh was removed from the pit, spring water was added to reduce the fruit mass to 60%, and the suspension was homogenized using a homogenizer or high pressure homogenizer. As discussed supra, the fruit pulp is supplemented with 1-3 wt % (preferably 2 wt %) of a natural preservative and 0.1 - 0.2 wt % (preferably 0.15 wt %) of a stabilizing antioxidant. Preferably, the preservative is sodium citrate/citric acid, and the antioxidant is ascorbic acid. Optionally, a food dye (0.05 - 0.2 wt % (preferably 0.1 wt % β-carotene) and/or a mango aroma (0.2 - 0.4 wt %, preferably 0.3 wt %) are added to the fruit pulp.

Selenium content was determined using graphite furnace atomic absorption spectrometry, using a PerkinElmer^{®} PinAAcle 900T flame and longitudinal Zeeman atomic absorption spectrometer or an equivalent instrument.

**Table 2: Concentrations of selenium in µg in 12.5 g fruit pulp (60%)***

| Fruit pulp (60%) | Selenium added in the fertilizer | | | |
|---|---|---|---|---|
| | none | Ammonium selenite | Sodium selenite | Potassium selenite |
| Mango | 6.4 +/- 1.1 | 77.6 +/- 8.2 | 24.9 +/- 1.9 | 28.7 +/- 2.7 |
| Papaya | 3.2 +/- 0.7 | 7.9 +/-1.4 | 8.1 +/-1.3 | 6.3 +/- 0.8 |

| | | | | |
|---|---|---|---|---|
| *Averages of determinations on fruit from 4 different trees. | | | | |

As the data in Table 2 show, different fruits are enriched for selenium to widely different extents. For example, no commercially useful enrichment could be achieved in papaya. However, elevated levels of selenium could be obtained in mango, provided that the appropriate selenium salt (i.e., ammonium selenite) was provided in the fertilizer.

Providing an example for a method of the present invention, i.e. how a beverage is prepared: 20 g sucrose and 1 g carnitine are dissolved in 125 ml spring water at room temperature. To this solution are added under stirring and at room temperature 26 mg quinine sulfate and 50 mg coenzyme Q10, which had been dissolved in 200 mg Tween^{®} 80. Stirring is continued for 30 min at room temperature, followed by sterile filtration.

12.5 g selenium-enriched mango fruit pulp (6.2 µg selenium per g of pulp) supplemented with 2 wt % of sodium citrate/citric acid and 0.15 wt % of ascorbic acid is added to the sterile-filtered solution described above, and the volume of the suspension is thereafter brought to 250 ml by the addition of sterile spring water. Filling of 250-ml cans is done in a standard commercial (automated) filling line. It is noted that the beverage of the present disclosure may be offered in can sizes from 100 to 500 ml. Components are purchased from Aldrich-Fluka (quinine sulfate, polysorbate 80, carnitine, ascorbic acid, sodium citrate, citric acid), Alibaba (carbohydrates and coenzyme Q10), and Givaudan (mango aroma, dyes). Organic selenium-enriched mango fruit pulp is purchased from ELLYswiss GmbH in CH-4422 Arisdorf, Hauptstrasse 72.

Recitation of ranges of values herein are merely intended to serve as a shorthand method of referring individually to each separate value falling within the range, unless otherwise indicated herein, and each separate value is incorporated into the specification as if it were individually recited herein. Unless otherwise stated, all exact values provided herein are representative of corresponding approximate values (e. g., all exact exemplary values provided with respect to a particular factor or measurement can be considered to also provide a corresponding approximate measurement, modified by "about," where appropriate).

The description herein of any aspect or embodiment of the invention using terms such as reference to an element or elements is intended to provide support for a similar aspect or embodiment of the disclosure that "consists of'," "consists essentially of' or "substantially comprises" that particular element or elements, unless otherwise stated or clearly contradicted by context (e.g., a composition described herein as comprising a particular element should be understood as also describing a composition consisting of that element, unless otherwise stated or clearly contradicted by context).

## Claims

1. A method for preparing a nonalcoholic fitness beverage comprising, in a total volume of 250 ml, a dietarily relevant amount of organic selenium (10-280 µg), the method comprising
(a) preparing a solution comprising, for a total volume of the beverage of 250 ml, 0.3 - 3.0 g carnitine, 10 - 300 mg coenzyme Q10, 2.5 - 25 mg quinine and 2.0 - 25 g carbohydrates in spring water,
(b) subjecting the solution to sterile filtration,
(c) adding to the sterile filtrated solution, for a total volume of the beverage of 250 ml, 5.0 - 40 g fruit pulp from organic selenium-enriched mango fruit, the mango fruit pulp supplemented with 1-3 wt % of a natural preservative and 0.1 - 0.2 wt % of an antioxidant, wherein the mango fruit pulp comprises 2.0 - 7.0 µg selenium per g of pulp, and
(d) adding sterile spring water to the total volume.

2. The method of claim 1, wherein the mango fruit pulp contains 6.0 +/- 0.9 µg selenium per g of pulp, and, for a total volume of the beverage of 250 ml, 12.5 +/-1.9 g of the fruit pulp are added to the sterile filtrated solution that comprises 20 +/-3.0 mg quinine, 20 +/- 3.0 g carbohydrates, 1.0 +/- 0.15 g carnitine, and 50 +/- 7.5 mg coenzyme Q10.

3. The method of claim 1 or 2, wherein the mango fruit pulp is supplemented with 2 wt % of a natural preservative and 0.15 wt % of a stabilizing antioxidant.

4. The method of any of claims 1-3, wherein the natural preservative is sodium citrate/citric acid and the stabilizing antioxidant is ascorbic acid.

5. The method of any of claims 1-4, wherein the carbohydrate is sucrose, raw cane sugar, a 1:1 (wt) mixture of sucrose and raw cane sugar, a 1:1 (wt) mixture of sucrose and glucose, a 1:1 (wt) mixture of glucose and raw cane sugar, a 1:1 (wt) mixture of glucose and fructose, or an artificial sweetener.

6. The method of claim 5, wherein the carbohydrate is a 1:1 (wt) mixture of sucrose and raw cane sugar.

7. The method of any of claims 1-6, wherein the mango fruit pulp is further supplemented with 0.05 - 0.2 wt % of a food dye and 0.2 - 0.4 wt % of a mango aroma.

8. The method of claim 7, wherein the food dye is ß-carotene.

9. The method of any of claims 1-8, wherein the organic selenium-enriched mango fruit are obtained by cultivating mango trees in a soil that is fertilized regularly during the growing season with a fertilizer supplemented with an inorganic selenium salt.

10. The method of claim 9, wherein the inorganic selenium salt with which the fertilizer is supplemented is ammonium selenite, sodium selenite or potassium selenite.

11. The method of claim 9 or 10, wherein the fertilizer is a 7-4-6 NPK fertilizer.

12. The method of any of claims 9-11, wherein the mango trees are fertilized at 2-week intervals.

## Patentansprüche

1. Verfahren zum Herstellen eines nicht-alkoholischen Fitnessgetränks, umfassend, in einem Gesamtvolumen von 250 ml, einer diätetisch relevanten Menge an organischem Selen (10-280 µg), das Verfahren umfassend
(a) Herstellen einer Lösung, umfassend, für ein Gesamtvolumen des Getränks von 250 ml, 0,3-3,0 g Carnitin, 10-300 mg Coenzym Q10, 2,5-25 mg Chinin und 2,0-25 g Kohlenhydrate in Quellwasser,
(b) Aussetzen der Lösung einer sterilen Filtration,
(c) Hinzufügen zu der sterilen filtrierten Lösung, für ein Gesamtvolumen des Getränks von 250 ml, 5,0-40 g Fruchtpüree aus organischen Selen-angereicherten Mangofrüchten, wobei das Mangofruchtpüree mit 1-3 Gew.-% eines natürlichen Konservierungsmittels und 0,1-0,2 Gew.-% eines Antioxidans ergänzt wird, wobei das Mangofruchtpüree 2,0-7,0 µg Selen pro g Zellstoff umfasst, und
(d) Hinzufügen eines sterilen Quellwassers zu dem Gesamtvolumen.

2. Verfahren nach Anspruch 1, wobei das Mangofruchtpüree 6,0 +/- 0,9 µg Selen pro g Püree enthält und für ein Gesamtvolumen des Getränks von 250 ml 12,5 +/- 1,9 g des Fruchtpürees zu der sterilen filtrierten Lösung hinzugefügt werden, die 20 +/- 3,0 mg Chinin, 20 +/- 3,0 g Kohlenhydrate, 1,0 +/- 0,15 g Carnitin und 50 +/- 7,5 mg Coenzym Q10 umfasst.

3. Verfahren nach Anspruch 1 oder 2, wobei das Mangofruchtpüree mit 2 Gew.-% eines natürlichen Konservierungsmittels und 0,15 Gew.-% eines stabilisierenden Antioxidans ergänzt wird.

4. Verfahren nach einem der Ansprüche 1 bis 3, wobei das natürliche Konservierungsmittel Natriumcitrat/Citronensäure ist und das stabilisierende Antioxidans Ascorbinsäure ist.

5. Verfahren nach einem der Ansprüche 1 bis 4, wobei das Kohlenhydrat Saccharose, Rohrohrzucker, eine 1 : 1 (wt) Mischung aus Saccharose und Rohrohrzucker, eine 1 : 1 (wt) Mischung aus Saccharose und Glucose, eine 1 : 1 (wt) Mischung aus Glucose und Rohrohrzucker, eine 1 : 1 (wt) Mischung aus Glucose und Fructose oder ein künstlicher Süßstoff ist.

6. Verfahren nach Anspruch 5, wobei das Kohlenhydrat eine 1 : 1 (wt) Mischung aus Saccharose und Rohrohrzucker ist.

7. Verfahren nach einem der Ansprüche 1 bis 6, wobei das Mangofruchtpüree ferner mit 0,05-0,2 Gew.-% eines Lebensmittelfarbstoffs und 0,2-0,4 Gew.-% eines Mangoaromas ergänzt wird.

8. Verfahren nach Anspruch 7, wobei der Lebensmittelfarbstoff β-Carotin ist.

9. Verfahren nach einem der Ansprüche 1 bis 8, wobei die organischen Selen-angereicherten Mangofrüchte durch ein Kultivieren von Mangobäumen in einem Boden erhalten werden, der regelmäßig während der Vegetationsperiode mit einem Düngemittel gedüngt wird, das mit einem anorganischen Selensalz ergänzt wird.

10. Verfahren nach Anspruch 9, wobei das anorganische Selensalz, mit dem das Düngemittel ergänzt wird, Ammoniumselenit, Natriumselenit oder Kaliumselenit ist.

11. Verfahren nach Anspruch 9 oder 10, wobei das Düngemittel ein 7-4-6 NPK-Düngemittel ist.

12. Verfahren nach einem der Ansprüche 9 bis 11, wobei die Mangobäume in 2-wöchigen Intervallen gedüngt werden.

## Revendications

1. Procédé de préparation d'une boisson de remise en forme non alcoolique comprenant, dans un volume total de 250 ml, une quantité diététiquement pertinente de sélénium organique (10 à 280 µg), le procédé comprenant
(a) la préparation d'une solution comprenant, pour un volume total de la boisson de 250 ml, 0,3 à 3,0 g de carnitine, 10 à 300 mg de coenzyme Q10, 2,5 à 25 mg de quinine et 2,0 à 25 g de glucides dans de l'eau de source,
(b) la soumission de la solution à une filtration stérile,
(c) l'ajout à la solution filtrée stérile, pour un volume total de la boisson de 250 ml, de 5,0 à 40 g de pulpe de fruit provenant de fruit de mangue enrichie en sélénium organique, la pulpe de fruit de mangue étant supplémentée avec 1 à 3 % en poids d'un conservateur naturel et de 0,1 à 0,2 % en poids d'un antioxydant, dans lequel la pulpe de fruit de mangue comprend de 2,0 à 7,0 µg de sélénium par g de pulpe, et
(d) l'ajout d'eau de source stérile au volume total.

2. Procédé selon la revendication 1, dans lequel la pulpe de fruit de mangue contient 6,0 +/- 0,9 µg de sélénium par g de pulpe, et, pour un volume total de la boisson de 250 ml, 12,5 +/- 1,9 g de la pulpe de fruit sont ajoutés à la solution filtrée stérile qui comprend 20 +/- 3,0 mg de quinine, 20 +/- 3,0 g de glucides, 1,0 +/- 0,15 g de carnitine et 50 +/- 7,5 mg de coenzyme Q10.

3. Procédé selon la revendication 1 ou 2, dans lequel la pulpe de fruit de mangue est supplémentée avec 2 % en poids d'un conservateur naturel et 0,15 % en poids d'un antioxydant stabilisant.

4. Procédé selon l'une quelconque des revendications 1 à 3, dans lequel le conservateur naturel est le citrate de sodium/acide citrique et l'antioxydant stabilisant est l'acide ascorbique.

5. Procédé selon l'une quelconque des revendications 1 à 4, dans lequel le glucide est saccharose, sucre de canne brut, un mélange 1:1 (en poids) de saccharose et de sucre de canne brut, un mélange 1:1 (en poids) de saccharose et de glucose, un mélange 1:1 (en poids) de glucose et de sucre de canne brut, un mélange 1:1 (en poids) de glucose et de fructose, ou un édulcorant artificiel.

6. Procédé selon la revendication 5, dans lequel le glucide est un mélange 1:1 (en poids) de saccharose et de sucre de canne brut.

7. Procédé selon l'une quelconque des revendications 1 à 6, dans lequel la pulpe de fruit de mangue est en outre supplémentée avec 0,05 à 0,2 % en poids d'un colorant alimentaire et 0,2 à 0,4 % en poids d'une arôme de mangue.

8. Procédé selon la revendication 7, dans lequel le colorant alimentaire est le ß-carotène.

9. Procédé selon l'une quelconque des revendications 1 à 8, dans lequel le fruit de mangue enrichi en sélénium organique est obtenu en cultivant des arbres de mangue dans un sol qui est fertilisé régulièrement pendant la saison de croissance avec un engrais supplémenté avec un sel de sélénium inorganique.

10. Procédé selon la revendication 9, dans lequel le sel de sélénium inorganique avec lequel l'engrais est supplémenté est sélénite d'ammonium, sélénite de sodium ou sélénite de potassium.

11. Procédé selon la revendication 9 ou 10, dans lequel l'engrais est un engrais NPK 7-4-6.

12. Procédé selon l'une quelconque des revendications 9 à 11, dans lequel les arbres de mangue sont fertilisés à des intervalles de 2 semaines.
